# EUROPEAN PATENT SPECIFICATION

(11) **EP 3 278 643 B1**
(45) Date of publication and mention of the grant of the patent: **17.04.2019**
(21) Application number: 16425081.3
(22) Date of filing: 03.08.2016
(51) Int. Cl.: A01B 33/00, A01B 33/04

(54) **IMPROVED MACHINE FOR TREATMENT OF AN AGRICULTURAL FIELD**
VERBESSERTE MASCHINE ZUR BEHANDLUNG EINER LANDWIRTSCHAFTLICHEN FLÄCHE
MACHINE AMÉLIORÉE DE TRAITEMENT D'UN CHAMP AGRICOLE

(43) Date of publication of application: 07.02.2018
(73) Proprietor: Criscione, Giovanni, 81041 Vitulazio (CE) (IT)
(72) Inventor: Criscione, Giovanni, 81041 Vitulazio (CE) (IT)
(74) Representative: Zizzari, Massimo

(56) References cited:
- DE-C- 150 419
- FR-A1- 2 124 135
- US-A- 360 310
- US-A- 1 544 501
- US-A- 3 233 683
- US-A- 4 909 334

## Description

The present invention is related to an improved machine for treatment of an agricultural field, that is towed by a tractor, and that is useful to provide several types of intervention, and in particular to prepare the soil for the sowing. Said machine is essentially composed of a supporting structure having a series of rotating shafts, having some operating tools with rotating blades connected to each of them, said blades being able to enter in contact radially and deeply into the soil, so that they can break down the clumps into small pieces, until they are crumbled to a very thin granularity.

As known, the ideal soil for agriculture should be be deep, friable, well drained and should have a high quantity of organic substances. The correct preparation of soil represents a good basis for a good germination of seeds and the successive growth of plants. This treatment is able, in fact, to improve the structure of soil and to give the best starting ground for plants. In many cases, a machine like in example the hoe machine is still the best machine for treatment of the soil.
The hoe machine helps to assure the production of soil. In case of a rotary hoe machine, this is an agricultural machine used to move the soil and useful to embed the waste from any previous production of plants. If compared to different types of hoe machines, the rotary hoe machine works revolving the clods and crumbling them, reducing the need of a further refining treatment. The power of motion can be given by animals or can be mechanical and, in the latter case, the machines are mounted on tractors, applied to a hydraulic lifter or to a towing hook.
The rotary hoe machine is made of a series of rotating harrows, jointed to a single horizontal shaft, or rotor; the rotation of the harrows activates the blades placed at the end of the harrows. Usually, the machine is activated by the main engine of the tractor, through a cardan joint transmission.

The machines from the prior art include some rotating harrows that are placed on a horizontal plane, having their axis perpendicular to the soil. This configuration in space does not represent the best solution, because it slows down the motion in the direction of the tractor run, and implies a very coarse processing of the clumps on the ground. In fact, even being revolved, the clumps are only partially cut off, and beside that the process requires a high consume of energy, and therefore of fuel in the tractor.

Furthermore, in order to treat large fields in a reasonable time, it is necessary to use large machines that require, to be towed and to move the blades, engines having a significant horse power.

With reference to the prior art, the following documents are known: US 4.909.334 A (Tanner Harvey et al.), DE 150 419 C, US 1.544 501 A (Joseph Teders August), US 360.310 A. The machines disclosed in the above documents have an important drawback. They do not include some guiding and/or lifting means blocking the height of the machine from ground, in order to decrease the friction arising from dragging on the soil, and to achieve a direction in motion of the same machine.

Therefore, the main objective of the present invention is to propose an improved machine for treatment of an agricultural field, that is towed by a tractor, that is useful to provide several types of intervention, and in particular to prepare the soil for the sowing. Said machine comprises a series of rotating blades being able to enter in contact radially and deeply into the soil, so that they can break down the clumps into small pieces very efficiently, until they are crumbled to a very thin granularity.

Another objective is that the spatial configuration of the rotating blades results to be optimal without representing a brake slowing down the motion of the tractor in the direction of run, so that the treatment of soil requires a low amount of energy and therefore it is possible to save on the consumption of the tractor fuel,

Another further objective is that the machine presents in general a low number of mechanical components in motion, and that the same mechanical elements work more efficiently, providing two or three times more the effect in respect to similar machines from the prior art, according to a coordinated and synergistic configuration of the single elements in motion.

An additional objective is that the machine results to be simple, not expensive, that works with standard devices providing the transmission of the power from the tractor, and that achieves higher levels of standards in the treatment of soil consuming an amount of energy comparable to that of similar machines from the prior art.

Therefore, it is specific subject of the present invention an improved machine for treatment of an agricultural field, that is useful to provide several types of intervention, and in particular to prepare the soil for the sowing, the machine being towed by a tractor and comprising:
- a supporting structure, having a front part that is lifted up and connected to a tractor, and a rear part that is lowered down directly to the soil to be treated, said structure having a longitudinal horizontal axis that is inclined;
- a series of rotating shafts connected to said supporting structure, each parallel to the other and placed according to the same inclined axis of the structure, having their front ends jointed to respective gears connected to a power source on the engine of the tractor that gives a rotary power supply, and having their rear ends connected to respective operating tools placed in a coaxial and concentric way to the same rotating shafts, so that the same operating tools are assembled at the lower part of the structure and are in contact with the soil; said operating tools have a radial symmetry and comprise some rotary blades that enter in contact radially, instead of perpendicularly as in the prior art, and deeply into the soil, so that the passage of the machine achieves to break down the clumps into small pieces very efficiently, until they are crumbled to a very thin granularity;
- guiding and/or lifting means, connected to said supporting structure of the machine, that include one or more wheels, slides or cylinders, and one or more telescopic rods with a mechanism blocking the height from ground, so that said wheels, slides or cylinders permit to decrease the friction arising from dragging on the soil, and achieve a direction in motion of machine, while the telescopic rods permit to change and fix the height of the machine from ground, giving a specific inclination of the longitudinal axis and therefore, as a consequence, a specific level of depth into the soil for the above said operating tools with respective rotating blades.

The present invention is now being described according to non-limiting examples, with particular reference to the figures of the enclosed drawings, where:
Figure 1 shows a lateral view of an improved machine for treatment of an agricultural field, connected and towed by a tractor, according to the present invention;
Figure 2 shows a top view of the same machine towed by a tractor of Figure 1;
Figure 3 shows a rear view of the same machine towed by a tractor of Figure 1;
Figure 4 shows a rear view of the same machine of Figure 1, visualized singularly;
Figure 5 shows a lateral view of the same machine of Figure 1, visualized singularly;
Figure 6 shows a top view of the same machine of Figure 1, visualized singularly;
Figure 7 shows a detail of a lateral view of the same machine of Figure 1, during the treatment of an agricultural field;
Figure 8 shows a top view of the same machine of Figure 1, being in a disassembled configuration;
Figure 9 shows a lateral view of some disassembled components belonging to the same machine of Figure 1;
Figure 10 shows a rear view of some disassembled components belonging to the same machine of Figure 1.

It is underlined that only few of the many conceivable embodiments of the present invention are here described, which are just some specific non-limiting examples, having the possibility to describe many other embodiments based on the disclosed technical solutions of the present invention. In different figures, the same elements will be indicated with the same reference numbers.

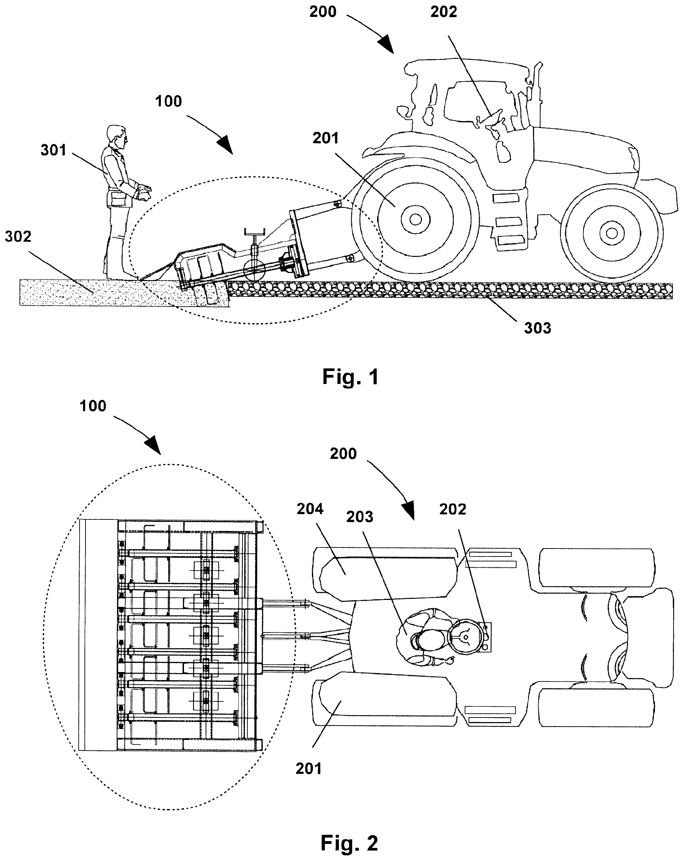

Figures 1, 2, and 3 show an improved machine 100 for treatment of an agricultural field 303, that is useful to provide several types of intervention, and in particular to prepare the soil for the sowing. The machine 100 is connected and towed by a tractor 200, and the same tractor 200 gives a rotary power supply through a power source on the engine.

The machine 100 essentially comprises a supporting structure, having a front part that is lifted up and connected to the tractor 200, and a rear part that is lowered down directly to the soil 303 to be treated, said structure having a longitudinal horizontal axis that is inclined.

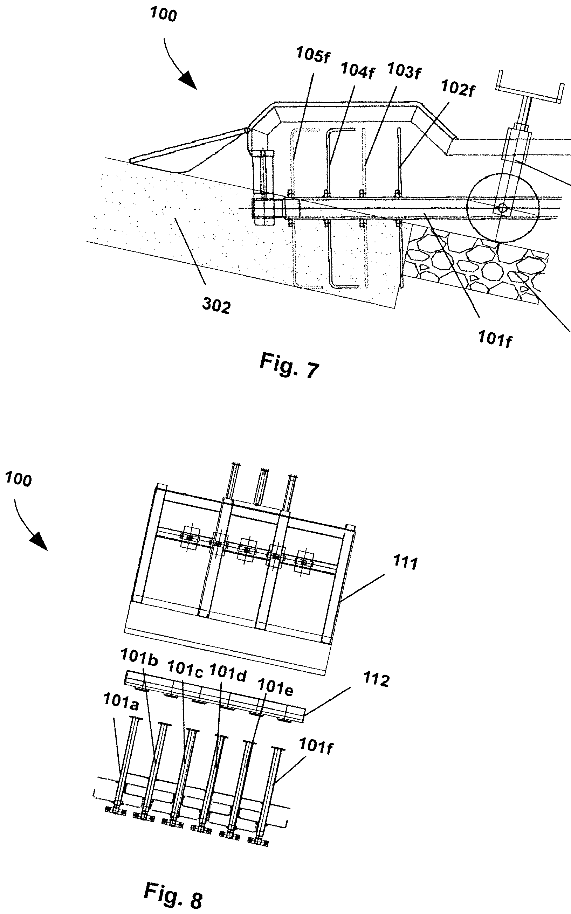

A series of rotating shafts 101a, 101b, ..., 101f are connected to said supporting structure, each parallel to the other and placed according to the same inclined axis of the structure (Figure 8 shows more in detail how the shafts are connected to the structure). The shafts 101a, 101b, ..., 101f have their front ends jointed to respective gears 107a, 107b, ..., 107f connected to the power supply from the engine of the tractor, and their rear ends are connected to respective operating tools 105a, 105b, ..., 105f placed in a coaxial and concentric way to the same rotating shafts 101a, 101b, ..., 101f. In this way the same operating tools 105a, 105b, ..., 105f are assembled at the lower part of the structure and are in contact with the soil 302.

In particular, said operating tools 105a, 105b, ..., 105f have a radial symmetry and comprise some rotary blades that enter in contact radially, instead of perpendicularly as in the prior art, and deeply into the soil 302, so that the passage of the machine 100 achieves to break down the clumps into small pieces very efficiently, until they are crumbled to a very thin granularity.

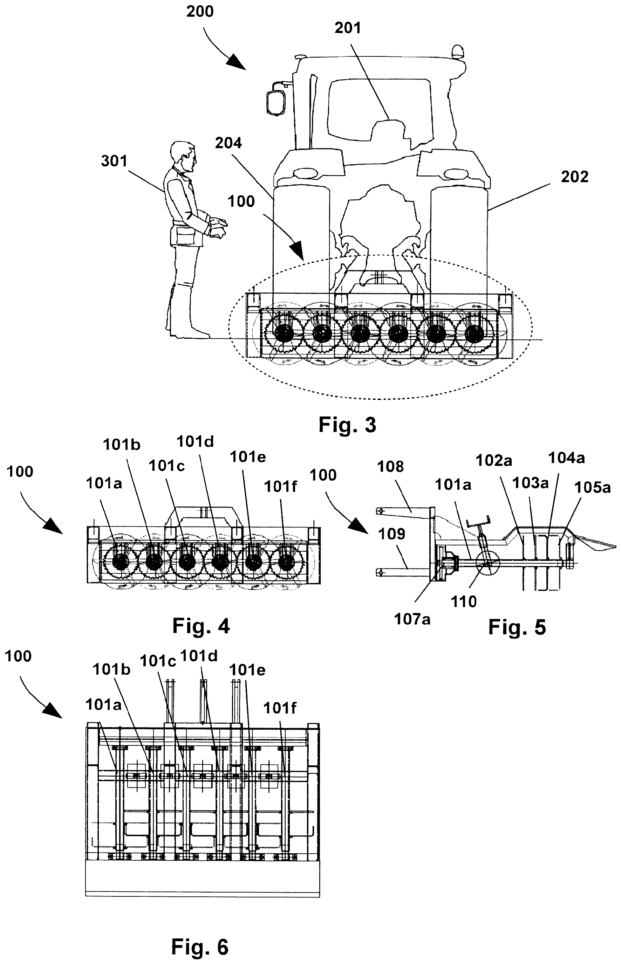

Figures 4, 5 and 6 show further details in machine 100, where the rotating shafts 101a, 101b, ..., 101f comprise respective operating tools 105a, 105b, ..., 105f and 104a, 104b, ..., 104f placed according to an alternate configuration. The inter-axis distance between adjacent rotating shafts 101a, 101b, 101b, 101c, ..., etc., is approximately equal to the diameter of each of the operating tools 105a, 105b, ..., 105f and 104a, 104b, ..., 104f and the rotary motion is synchronized. In such a way, the end of the blades in the operating tools 105a, 105b, ..., 105f are placed within the spaces of the blades in the operating tools 104a, 104b, ..., 104f, and the end of the blades in the operating tools 104a, 104b, ..., 104f are placed within the spaces of the blades in the operating tools 105a, 105b, ..., 105f. Consequently, the extremely narrow space between the blades permits to break down the clumps, taken within the blades, into small pieces very efficiently, until they are crumbled to a very thin granularity.

Further according to the invention, said operating tools 105a, 105b, ..., 105f and 104a, 104b, ..., 104f can be placed on said rotating shafts 101a, 101b, ..., 101f in a position along the longitudinal axis that can be towards the front end or the rear end. In such a way, different spatial configurations of blades can be achieved, that define different modes of soil treatment, with respective levels to break down the clumps into small pieces, until they are crumbled to a thinner or coarser granularity.

With reference to Figure 7, said operating tools 105a, 105b, ..., 105f and 104a, 104b, ..., 104f have the outer radial end of blades with a curved profile, so that the space is further decreased within the blades, and it is possible to break down the clumps into small pieces even more efficiently, until they are crumbled to a very thin granularity.

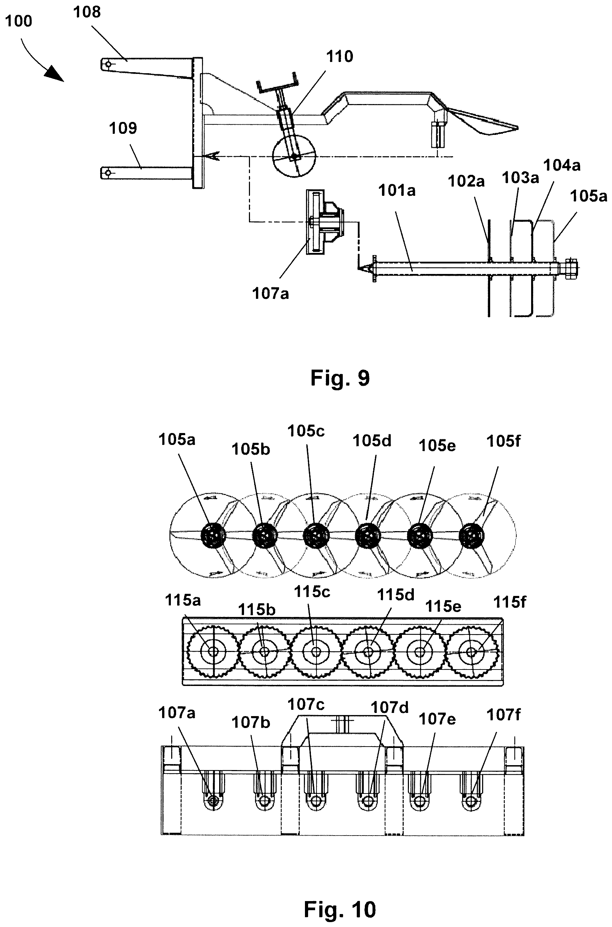

According to an embodiment of the present invention, as shown in Figures 9 and 10, said rotating shafts 101a, 101b, ..., 101f can comprise additional operating tools 103a, 103b, ..., 103f and 102a, 102b, ..., 102f placed according to an alternate configuration. The inter-axis distance between adjacent rotating shafts 101a, 101b, 101b, 101c, ..., etc., is approximately equal to the diameter of each of the operating tools 103a, 103b, ..., 103f and 102a, 102b, ..., 102f, and the rotary motion is synchronized. In such a way, the end of the blades in the operating tools 103a, 103b, ..., 103f are placed within the spaces of the blades in the operating tools 102a, 102b, ..., 102f, and the end of the blades in the operating tools 102a, 102b, ..., 102f are placed within the spaces of the blades in the operating tools 103a, 103b, ..., 103f. In such a way, the extremely narrow space between the blades permits to break down the clumps, taken within the blades, into small pieces very efficiently, until they are crumbled to a very thin granularity.

The operating tools 103a, 103b, ..., 103f and 102a, 102b, ..., 102f can be placed on said rotating shafts 101a, 101b, ..., 101f in a position along the longitudinal axis that can be towards the front end or the rear end. In such a way, different spatial configurations of blades can be achieved, that define different modes of soil treatment, with respective levels to break down the clumps into small pieces, until they are crumbled to a thinner or coarser granularity.

The operating tools 103a, 103b, ..., 103f and 102a, 102b, ..., 102f have the outer radial end of blades with a curved profile, so that the space is further decreased within the blades, and it is possible to break down the clumps into small pieces even more efficiently, until they are crumbled to a very thin granularity.

Figures 5, 7 and 10 show more in detail the additional presence of guiding and/or lifting means 110, connected to said supporting structure of the machine 100. They include one or more wheels, slides or cylinders, and one or more telescopic rods with a mechanism blocking the height from ground. In such a way, said wheels, slides or cylinders permit to decrease the friction arising from dragging on the soil and achieve a direction in motion of machine 100. At the same time the telescopic rods permit to change and fix the height of the machine 100 from ground, giving a specific inclination of the longitudinal axis and therefore, as a consequence, a specific level of depth into the soil for the above said operating tools with respective rotating blades. In example, it is possible to make the blades to work into the soil at a depth higher than the traditional 15 cm.

Said guiding and/or lifting means 110 can further comprise one or more ballasts, particularly useful to keep the machine 100 perfectly adherent to the soil, and to give stability during the process of motion and treatment of the agricultural field 303.

Furthermore, said operating tools with respective rotating blades can have different geometrical shapes, with the outer radial ends curved according to different angles, in example the following shapes can be applied: disk shapes, knife shapes being curved according to different directions, helix shapes similar to that of boats, double counter posed helix shapes, helix shapes similar to that of turbines, harrow shapes, other shapes similar to that of blades in standard hoe machines, in milling machines, in other machines for agriculture or gardening in general.

It is possible to demonstrate that the improved machine of the present invention represents a significant achievement, when compared to the traditional hoe machines and to a traditional machine with hollows.

**Table 1: number of elements according to different types of machines.**

| Type of machine | width | Number of elements | Number of elements into the soil |
|---|---|---|---|
| Hoe machine | 350 cm | 84 | 42 |
| Machine with hollows | 350 cm | 32 | 32 |
| GC100 (present invention) | 350 cm | 30 | 15 |

With reference to Table 1, machines having the same width of 350 cm have the following features: in case of a hoe machine, 84 elements with 42 elements into the soil, in case of a machine with hollows, 32 elements with 32 elements into the soil, in case of a GC100 machine of the present invention, 30 elements with 15 elements into the soil.

With reference to Table 2, considering a typical speed of tractor of 6 Km/h, it is calculated that in one minute 100 meters are run. In the same time, the transmission means of the power supply put the gears in motion at 20 rpm.

This leads as a consequence that: in case of a hoe machine, the 42 elements make approximately 900 cuts per minute into the soil, in case of a machine with hollows, the 32 elements make approximately 600 cuts per minute into the soil, in case of a GC100 machine of the present invention, the 15 elements make in a first configuration approximately 1800 cuts per minute into the soil, and in a second configuration approximately 3600 cuts per minute into the soil.

Therefore, in order to calculate the size of the cuts into the soil, we achieve: in case of a hoe machine, cuts of approximately 11 cm, in case of a machine with hollows, cuts of approximately 15 cm, in case of a GC100 machine of the present invention, in a first configuration cuts of approximately 5.5 cm, and in a second configuration cuts of approximately 2.7 cm.

**Table 2: size of cuts according to different types of machines.**

| Type of machine | n. cuts per minute | Velocity of tractor | Size of cuts into the soil |
|---|---|---|---|
| Hoe machine | 900 | 6 Km/h | 11 cm |
| Machine with hollows | 600 | 6 Km/h | 15 cm |
| GC100 (present invention) | 1800 | 6 Km/h | 5.5 cm |
| | 3600 | 6 Km/h | 2.7 cm |

Therefore, it is clear that, when compared with machines from the prior art, the present invention is able to break down the clumps of the soil in a more quick and efficient way. In such a way, it is possible in example to use only 6 elements in the soil, instead of 24, and the same elements are able to make two times the work in respect to the traditional machines, leading to obvious advantages in respect to a faster treatment of the soil, a better quality level of the resulting soil, and a decrease of the consumption of fuel in the tractor.

Therefore, the above examples show that the present invention reaches all the expected objectives. In particular, it permits to achieve an improved machine for treatment of an agricultural field, that is towed by a tractor, that is useful to provide several types of intervention, and in particular to prepare the soil for the sowing. Said machine comprises a series of rotating blades being able to enter in contact radially and deeply into the soil, so that they can break down the clumps into small pieces very efficiently, until they are crumbled to a very thin granularity.

Furthermore, the spatial configuration of the rotating blades results to be optimal without representing a brake slowing down the motion of the tractor in the direction of run, so that the treatment of soil requires a low amount of energy and therefore it is possible to save on the consumption of the tractor fuel,

Furthermore, the machine presents in general a low number of mechanical components in motion, and the same mechanical elements work more efficiently, providing two or three times more the effect in respect to similar machines from the prior art, according to a coordinated and synergistic configuration of the single elements in motion.

Furthermore, according to the invention, the machine results to be simple, not expensive, that works with standard devices providing the transmission of the power from the tractor, and that achieves higher levels of standards in the treatment of soil consuming an amount of energy comparable to that of similar machines from the prior art.

The present invention has been described by making reference to some non-limiting examples and following some preferred embodiments; however it goes without saying that modifications and/or changes could be introduced by those skilled in the art without departing from the relevant scope, as defined in the enclosed claims.

## Claims

1. Machine (100) for treatment of an agricultural field (303), in particular to prepare the soil for the sowing, the machine (100) being towed by a tractor (200), comprising:
- a supporting structure, having a front part that is lifted up and connected to a tractor (200), and a rear part that is lowered down directly to the soil (303) to be treated, said structure having a longitudinal horizontal axis that is inclined;
- a series of rotating shafts (101a, 101b, ..., 101f) connected to said supporting structure, each parallel to the other and placed according to the same inclined axis of the structure, having their front ends jointed to respective gears (107a, 107b, ..., 107f) connected to a power source on the engine of the tractor (200) that gives a rotary power supply, and having their rear ends connected to respective operating tools (105a, 105b, ..., 105f) placed in a coaxial and concentric way to the same rotating shafts (101a, 101b, ..., 101f), so that the same operating tools (105a, 105b, ..., 105f) are assembled at the lower part of the structure and are in contact with the soil (302); said operating tools (105a, 105b, ..., 105f) have a radial symmetry and comprise some rotary blades that enter in contact radially and deeply into the soil (302), so that the passage of the machine (100) achieves to break down the clumps into small pieces very efficiently, until they are crumbled to a very thin granularity,
**characterized in that** further comprising:
- guiding and/or lifting means (110), connected to said supporting structure of the machine (100), that include one or more wheels, slides or cylinders, and one or more telescopic rods with a mechanism blocking the height from ground, so that said wheels, slides or cylinders permit to decrease the friction arising from dragging on the soil, and achieve a direction in motion of machine (100), while the telescopic rods permit to change and fix the height of the machine (100) from ground, giving a specific inclination of the longitudinal axis and therefore, as a consequence, a specific level of depth into the soil for the above said operating tools with respective rotating blades.

2. Machine (100) for treatment of an agricultural field (303), according to previous claim 1, **characterized in that**:
- said guiding and/or lifting means (110) further comprise one or more ballasts, particularly useful to keep the machine (100) perfectly adherent to the soil, and to give stability during the process of motion and treatment of the agricultural field (303).

3. Machine (100) for treatment of an agricultural field (303), according to one or more of previous claims, **characterized in that**:
- said rotating shafts (101a, 101b, ..., 101f) comprise respective operating tools (105a, 105b, ..., 105f) and (104a, 104b, ..., 104f) placed according to an alternate configuration, where the inter-axis distance between adjacent rotating shafts (101a, 101b), (101b, 101c), ..., etc., is approximately equal to the diameter of each of the operating tools (105a, 105b, ..., 105f) and (104a, 104b, ..., 104f), and the rotary motion is synchronized so that the end of the blades in the operating tools (105a, 105b, ..., 105f) are placed within the spaces of the blades in the operating tools (104a, 104b, ..., 104f), and the end of the blades in the operating tools (104a, 104b, ..., 104f) are placed within the spaces of the blades in the operating tools (105a, 105b, ..., 105f), so that the extremely narrow space between the blades permits to break down the clumps, taken within the blades, into small pieces very efficiently, until they are crumbled to a very thin granularity.

4. Machine (100) for treatment of an agricultural field (303), according to previous claim 3, **characterized in that**:
- said operating tools (105a, 105b, ..., 105f) and (104a, 104b, ..., 104f) can be placed on said rotating shafts (101a, 101b, ..., 101f) in a position along the longitudinal axis that can be towards the front end or the rear end, so that different spatial configurations of blades can be achieved, that define different modes of soil treatment, with respective levels to break down the clumps into small pieces, until they are crumbled to a thinner or coarser granularity.

5. Machine (100) for treatment of an agricultural field (303), according to previous claim 3 or 4, **characterized in that**:
- said operating tools (105a, 105b, ..., 105f) and (104a, 104b, ..., 104f) have the outer radial end of blades with a curved profile, so that the space is further decreased within the blades, and it is possible to break down the clumps into small pieces even more efficiently, until they are crumbled to a very thin granularity.

6. Machine (100) for treatment of an agricultural field (303), according to one or more of previous claims, **characterized in that**:
- said rotating shafts (101a, 101b, ..., 101f) comprise additional operating tools (103a, 103b, ..., 103f) and (102a, 102b, ..., 102f) placed according to an alternate configuration, where the inter-axis distance between adjacent rotating shafts (101a, 101b), (101b, 101c), ..., etc., is approximately equal to the diameter of each of the operating tools (103a, 103b, ..., 103f) and (102a, 102b, ..., 102f), and the rotary motion is synchronized so that the end of the blades in the operating tools (103a, 103b, ..., 103f) are placed within the spaces of the blades in the operating tools (102a, 102b, ..., 102f), and the end of the blades in the operating tools (102a, 102b, ..., 102f) are placed within the spaces of the blades in the operating tools (103a, 103b, ..., 103f), so that the extremely narrow space between the blades permits to break down the clumps, taken within the blades, into small pieces very efficiently, until they are crumbled to a very thin granularity.

7. Machine (100) for treatment of an agricultural field (303), according to previous claim 6, **characterized in that**:
- said operating tools (103a, 103b, ..., 103f) and (102a, 102b, ..., 102f) can be placed on said rotating shafts (101a, 101b, ..., 101f) in a position along the longitudinal axis that can be towards the front end or the rear end, so that different spatial configurations of blades can be achieved, that define different modes of soil treatment, with respective levels to break down the clumps into small pieces, until they are crumbled to a thinner or coarser granularity.

8. Machine (100) for treatment of an agricultural field (303), according to previous claim 6 or 7, **characterized in that**:
- said operating tools (103a, 103b, ..., 103f) and (102a, 102b, ..., 102f) have the outer radial end of blades with a curved profile, so that the space is further decreased within the blades, and it is possible to break down the clumps into small pieces even more efficiently, until they are crumbled to a very thin granularity.

9. Machine (100) for treatment of an agricultural field (303), according to one or more of previous claims, **characterized in that**:
- said operating tools with respective rotating blades can have different geometrical shapes, with the outer radial ends curved according to different angles, in example the following shapes can be applied: disk shapes, knife shapes being curved according to different directions, helix shapes similar to that of boats, double counter posed helix shapes, helix shapes similar to that of turbines, harrow shapes, other shapes similar to that of blades in standard hoe machines, in milling machines, in other machines for agriculture or gardening in general.

## Patentansprüche

1. Maschine (100) für die Bearbeitung von landwirtschaftlichen Flächen (303), insbesondere zur Vorbereitung eines Bodens für die Saatphase, geschleppt von einem Traktor (200), und die folgendes umfasst:
- eine Stützstruktur mit einem vorderen angehobenen und an einen Traktor angekoppelten Teil (200), und einen hinteren abgesenkten Teil, der direkt auf dem zu bearbeitenden Boden abgestützt wird (303), besagt Struktur verfügt über eine horizontale geneigte Längsachse;
- eine Reihe von rotierenden Wellen (101a, 101b, ..., 101f), die mit der vorgenannten Stützstruktur verbunden und jeweils parallel zu einander sind und die gemäß der geneigten Achse der Struktur angeordnet sind und an deren vorderen Enden die jeweiligen Getrieben (107a, 107b, ..., 107f) angeschlossen sind, die an eine Zapfwelle auf dem Motor des Traktor (200) angeschlossen sind, die eine Drehantriebskraft liefert und deren hintere Enden an den entsprechenden Bearbeitungswerkzeugen angeschlossen sind (105a, 105b, ..., 105f), die in Bezug auf dieselben drehenden Wellen auf koaxiale und konzentrische Weise positioniert sind (101a, 101b, ..., 101f), so dass besagte Bearbeitungswerkzeuge (105a, 105b, ..., 105f) im unteren Teil der Struktur montiert sind und in Kontakt mit dem Boden kommen (302); die vorgenannten Bearbeitungswerkzeuge (105a, 105b, ..., 105f) haben eine radiale Symmetrie und umfassen die rotierenden Klingen, die radial und tief mit dem Boden (302) in Kontakt kommen, so dass der Durchgang der Maschine (100) ermöglicht, sehr effizient die Erdschollen des Bodens selbst zu zerkleinern (302), bis sie zerbröselt sind und über eine sehr feine Konsistenz und Körnung verfügen,
ausgezeichnet durch die Tatsache, weiter folgendes zu umfassen:
- Führungs- und/oder Hebemittel (110), die an die vorgenannte Stützstruktur der Maschine (100), angekoppelt werden, die ein oder mehrere Räder, Schlitten oder Walzen und eine oder mehrere teleskopische Stangen mit Blockierung der Höhe vom Boden umfassen, so dass besagte Räder, Schlitten oder Walzen die Verringerung der Schleppreibung auf dem Boden erlauben und eine Direktionalität in die Bewegungen der Maschine (100) übertragen, während die teleskopischen Stangen die Einstellung und die Befestigung der Höhe der Maschine (100) vom Boden erlauben und so eine spezifische Neigung der Längsachse erlauben und daher folglich eine bestimmte Tiefe im Boden der vorgenannten Bearbeitungswerkzeuge mit entsprechenden drehenden Klingen.

2. Maschine (100) für die Bearbeitung von landwirtschaftlichen Flächen (303), gemäß dem vorherigen Anspruch 1, die sich durch die Tatsache auszeichnet, dass:
- die vorgenannten Führungs- und/oder Hebemittel (110) ihrerseits ein oder mehrere Vorschaltgeräte umfassen, die besonders dafür geeignet sind, dass die Maschine (100) perfekt auf dem Boden haftet und ihr während der Bewegungsphase und der Bearbeitung der landwirtschaftlichen Fläche (303) Stabilität verleiht.

3. Maschine (100) für die Bearbeitung von landwirtschaftlichen Flächen (303), gemäß einem oder mehreren vorherigen Ansprüchen, die sich durch die Tatsache auszeichnet, dass:
- die vorgenannten drehenden Wellen (101a, 101b, ..., 101f) die jeweiligen Bearbeitungswerkzeuge (105a, 105b, ..., 105f) und (104a, 104b, ..., 104f) umfassen, die nach einer abwechselnden Konfiguration angeordnet sind, in der der Abstand zwischen den benachbarten drehenden Wellen (101a, 101b), (101b, 101c), ..., usw. etwa dem Durchmesser eines jeden Bearbeitungswerkzeugs (105a, 105b, ..., 105f) und (104a, 104b, ..., 104f) entspricht und die Drehung so synchronisiert ist, dass die Enden der Klingen der Werkzeuge (105a, 105b, ..., 105f) die Räume zwischen den Klingen der Werkzeuge (104a, 104b, ..., 104f) besetzen und die Enden der Klingen der Werkzeug (104a, 104b, ..., 104f) die Räume zwischen den Klingen der Werkzeuge besetzen (105a, 105b, ..., 105f), so dass dieser extrem reduzierte Raum zwischen den Klingen erlaubt, effizient die Erdschollen (302), die in den Klingen bleiben, in sehr kleine Stücke zu zerkleinern und sie zu einer sehr feinen Körnung machen.

4. Maschine (100) für die Bearbeitung von landwirtschaftlichen Flächen (303), gemäß dem vorherigen Anspruch 3, die sich durch die Tatsache auszeichnet, dass:
- die vorgenannten Bearbeitungswerkzeuge (105a, 105b, ..., 105f) und (104a, 104b, ..., 104f) in Entsprechung der vorgenannten drehenden Wellen (101a, 101b, ..., 101f) in einer mehr oder weniger vorgerückten Position in Bezug auf die jeweiligen Längsachsen positioniert werden können, so dass unterschiedliche räumliche Konfigurationen der Klingen bestimmt werden, die unterschiedliche Arten der Bearbeitung des Bodens implementieren können, mit entsprechenden unterschiedlichen Stufen der Zerkleinerung der Erdschollen des Bodens (302), indem sie zu einer sehr oder weniger feinen Körnung zerbröselt werden.

5. Maschine (100) für die Bearbeitung von landwirtschaftlichen Flächen (303), gemäß einem der vorherigen Ansprüche 3 oder 4, die sich durch die Tatsache auszeichnet, dass:
- die vorgenannten Bearbeitungswerkzeuge (105a, 105b, ..., 105f) und (104a, 104b, ..., 104f) die radiale Außenkante der Klingen mit einem gekrümmtem Profil haben, so dass der zusätzlich zwischen den Klingen reduzierte Raum erlaubt, noch effizienter die Erschollen des Bodens (302), die in den Klinken bleiben, in sehr kleine Stücke zu zerkleinern, indem sie zu einer sehr feinen Körnung zerbröselt werden.

6. Maschine (100) für die Bearbeitung von landwirtschaftlichen Flächen (303), gemäß einem oder mehreren vorherigen Ansprüchen, die sich durch die Tatsache auszeichnet, dass:
- die vorgenannten drehenden Wellen (101a, 101b, ..., 101f) zusätzlich entsprechende Bearbeitungswerkzeuge (103a, 103b, ..., 103f) und (102a, 102b, ..., 102f) umfassen, die nach einer abwechselnden Konfiguration angeordnet sind, in der der Achsenabstand zwischen den benachbarten drehenden Wellen (101a, 101b), (101b, 101c), ..., etc., in etwa dem Durchmesser jedes der Bearbeitungswerkzeuge (103a, 103b, ..., 103f) und (102a, 102b, ..., 102f) entspricht und die Drehung so synchronisiert ist, dass die Enden der Klingen der Werkzeuge (103a, 103b, ..., 103f) die Räume zwischen den Klingen der Werkzeuge (102a, 102b, ..., 102f) und die Enden der Klingen der Werkzeuge (102a, 102b,..., 102f) die Räume zwischen den Klingen der Werkzeuge (103a, 103b, ..., 103f) besetzen, so dass der zwischen den Klingen extrem reduzierte Raum erlaubt, zusätzlich die Erschollen des Bodes (302), die in den Klingen bleiben, zu sehr kleinen Stücken zu zerkleinern, indem sie zu einer sehr feinen Körnung zerbröselt werden.

7. Maschine (100) für die Bearbeitung von landwirtschaftlichen Flächen (303), gemäß dem vorherigen Anspruch 6, der sich durch die Tatsache auszeichnet, dass:
- die vorgenannten Bearbeitungswerkzeuge (101a, 101b, ..., 101f) in Entsprechung der vorgenannten drehenden Wellen (101a, 101b, ..., 101f) in einer mehr oder weniger vorgerückten Position in Bezug auf die Längsachse positioniert werden können, so dass unterschiedliche räumliche Konfigurationen der Klingen bestimmt werden, die unterschiedliche Arten der Bearbeitung des Boden implementieren können, mit entsprechenden unterschiedlichen Stufen der Zerkleinerung der Erdschollen des Bodens (302), indem sie zu einer sehr oder weniger feinen Körnung zerbröselt werden.

8. Maschine (100) für die Bearbeitung von landwirtschaftlichen Flächen (303), gemäß einem der vorherigen Ansprüche 6 oder 7, die sich durch die Tatsache auszeichnet, dass:
- die vorgenannten Bearbeitungswerkzeuge (103a, 103b, ..., 103f) und (102a, 102b, ..., 102f) die radiale Außenkante der Klingen mit einem gekrümmtem Profil haben, so dass der zusätzlich zwischen den Klingen reduzierte Raum erlaubt, noch effizienter die Erschollen des Bodens (302), die in den Klinken bleiben, in sehr kleine Stücke zu zerkleinern, indem sie zu einer sehr feinen Körnung zerbröselt werden.

9. Maschine (100) für die Bearbeitung von landwirtschaftlichen Flächen (303), gemäß einem oder mehreren vorherigen Ansprüchen, die sich durch die Tatsache auszeichnet, dass:
- die vorgenannten Bearbeitungswerkzeuge mit den jeweiligen drehenden Klinken verschiedene geometrische Formen haben können, mit in verschiedenen Winkeln gekrümmten Enden, es können zum Beispiel scheibenförmige Formen, schaufelförmige Formen mit Krümmungen nach verschiedenen möglichen Richtungen, spiralförmige Formen, die denen von Booten ähnlich sind, Formen mit gegenüberliegenden Spiralen, Formen, die denen von Turbinen ähnlich sind, eggenförmige Formen, Formen die denen von Standardklingen von Hacken, Fräsmaschinen oder Maschinen für die Landwirtschaft und den Gartenbau im Allgemeinen ähnlich sind, angewandt werden.

## Revendications

1. Machine (100) pour le travail de surfaces agricoles (303), en particulier pour la préparation du sol en vue du semis, tirée par un tracteur (200) et comprenant:
- une structure de support comportant une partie avant relevée et fixée à un tracteur (200) et une partie arrière abaissée, qui repose directement au sol à travailler (303), ladite structure ayant un axe longitudinal horizontal incliné;
- une série d'arbres rotatifs (101a, 101b, ..., 101f) reliés à ladite structure de support, parallèles les uns aux autres et disposés le long du même axe incliné de la structure, dont les extrémités avant sont reliées à des engrenages respectifs (107a, 107b, ..., 107f), reliés à une prise de force du moteur du tracteur (200) qui fournit une force motrice rotative, et dont les extrémités arrière sont reliées à des outils de travail respectifs (105a, 105b, ..., 105f), placés coaxialement et concentriquement par rapport à ces arbres rotatifs (101a, 101b, ..., 101f), de telle sorte que lesdits outils de travail (105a, 105b, ..., 105f) soient montés sur la partie inférieure de la structure et entrent en contact avec le sol (302);
lesdits outils de travail (105a, 105b, ..., 105f) ont une symétrie radiale et comportent des lames rotatives qui entrent en contact radialement et profondément dans le sol (302), de sorte que le passage de la machine (100) permette de broyer très efficacement les mottes de ce sol (302), jusqu'à ce qu'elles soient déchiquetées et que leur consistance et granularité soit très fine,
**caractérisée par le fait qu'**elle comprend également:
- des moyens de guidage et/ou levage (110) fixés à ladite structure de support de la machine (100), comprenant une ou plusieurs roues, glissières ou rouleaux, et une ou plusieurs tiges télescopiques verrouillables au niveau du sol, de telle sorte que ces roues, glissières ou rouleaux permettent de réduire le frottement par friction au sol et dirigent les déplacements de la machine (100), tandis que les tiges télescopiques permettent d'ajuster et de fixer la hauteur de la machine (100) par rapport au sol, en déterminant une inclinaison spécifique de l'axe longitudinal et, par conséquent, un certain niveau de profondeur dans le sol desdits outils de travail avec leurs lames rotatives.

2. Machine (100) pour le travail de surfaces agricoles (303), selon la revendication 1 qui précède, **caractérisée par le fait que**:
- lesdits moyens de guidage et/ou levage (110) comprennent à leur tour un ou plusieurs ballasts, particulièrement adaptés pour faire en sorte que la machine (100) adhère parfaitement au sol et pour assurer la stabilité pendant le déplacement et le travail des surfaces agricoles (303).

3. Machine (100) pour le travail de surfaces agricoles (303), selon une ou plusieurs des revendications qui précèdent, **caractérisée par le fait que**:
- lesdits arbres rotatifs (101a, 101b, ..., 101f) comprennent des outils d'usinage respectifs (105a, 105b, ..., 105f) et (104a, 104b, ..., 104f) disposés selon une configuration alternée, où la distance d'entraxe entre les arbres rotatifs adjacents (101a, 101b), (101b, 101c), ...etc. est approximativement égale au diamètre de chacun des outils de travail (105a, 105b, ..., 105f) et (104a, 104b, ..., 104f), et la rotation est synchronisée de telle sorte que les extrémités des lames des outils (105a, 105b, ..., 105f) occupent les espaces entre les lames des outils (104a, 104b, ..., 104f) et que les extrémités des lames des outils (104a, 104b, ..., 104f) occupent les espaces entre les lames des outils (105a, 105b, ..., 105f), de telle sorte que l'espace extrêmement réduit entre les lames broie efficacement les mottes de terre (302) restant à l'intérieur des lames en très petits morceaux, en les déchiquetant et en leur donnant une granularité très fine.

4. Machine (100) pour le travail de surfaces agricoles (303), selon la revendication 3 qui précède, **caractérisée par le fait que**:
- lesdits outils de travail (105a, 105b, ..., 105f) et (104a, 104b, ..., 104f) peuvent être disposés au niveau desdits arbres rotatifs (101a, 101b, ..., 101f), dans une position plus ou moins avancée par rapport à leur axe longitudinal respectif, de manière à déterminer différentes configurations spatiales des lames, qui peuvent mettre en oeuvre différents modes de travail du sol, avec différents niveaux respectifs de broyage des mottes de terre (302), en les déchiquetant et en leur donnant une granularité plus ou moins fine.

5. Machine (100) pour le travail de surfaces agricoles (303), selon une ou plusieurs des revendications 3 ou 4 qui précèdent, **caractérisée par le fait que**:
- lesdits outils de travail (105a, 105b, ..., 105f) et (104a, 104b, ..., 104f) ont le bord radial externe des lames avec un profil incurvé, de sorte que l'espace encore réduit entre les lames permette de broyer plus efficacement les mottes de terre (302) qui restent à l'intérieur des lames, en formant de très petits morceaux, en les déchiquetant et en leur donnant une granularité très fine.

6. Machine (100) pour le travail de surfaces agricoles (303), selon une ou plusieurs des revendications qui précèdent, **caractérisée par le fait que**:
- lesdits arbres rotatifs (101a, 101b, ..., 101f) comprennent également des outils de travail respectifs (103a, 103b, ..., 103f) et (102a, 102b, ..., 102f), disposés selon une configuration alternée, où la distance d'entraxe entre les arbres rotatifs adjacents (101a, 101b), (101b, 101c), ...etc. est approximativement égale au diamètre de chacun des outils de travail (103a, 103b, ..., 103f) et (102a, 102b, ..., 102f), et la rotation est synchronisée de telle sorte que les extrémités des lames des outils (103a, 103b, ..., 103f) occupent les espaces entre les lames des outils (102a, 102b, ...102f) et les extrémités des lames des outils (102a, 102b, ..., 102f) occupent les espaces entre les lames des outils (103a, 103b, ..., 103f), de telle sorte que l'espace extrêmement réduit entre les lames broie également les mottes de terre (302) restant à l'intérieur des lames en très petits morceaux, en les déchiquetant et en leur donnant une granularité très fine.

7. Machine (100) pour le travail de surfaces agricoles (303), selon la revendication 6 qui précède, **caractérisée par le fait que**:
- lesdits outils de travail (103a, 103b, ..., 103f) et (102a, 102b, ..., 102f) peuvent être disposés au niveau desdits arbres rotatifs (101a, 101b, ..., 101f), dans une position plus ou moins avancée par rapport à leur axe longitudinal respectif, de manière à déterminer différentes configurations spatiales des lames, qui peuvent mettre en oeuvre différents modes de travail du sol, avec différents niveaux respectifs de broyage des mottes de terre (302), en les déchiquetant et en leur donnant une granularité plus ou moins fine.

8. Machine (100) pour le travail de surfaces agricoles (303), selon une ou plusieurs des revendications 6 ou 7 qui précèdent, **caractérisée par le fait que**:
- lesdits outils de travail (103a, 103b, ..., 103f) et (102a, 102b, ..., 102f) ont le bord radial externe des lames avec un profil incurvé, de sorte que l'espace encore réduit entre les lames permette de broyer plus efficacement les mottes de terre (302) qui restent à l'intérieur des lames, en formant de très petits morceaux, en les déchiquetant et en leur donnant une granularité très fine.

9. Machine (100) pour le travail de surfaces agricoles (303), selon une ou plusieurs des revendications qui précèdent, **caractérisée par le fait que**:
- lesdits outils de travail avec leurs lames rotatives respectives peuvent avoir différentes formes géométriques, avec les extrémités incurvées selon différents angles ; par exemple, on peut y appliquer des formes à disque, à couteaux avec des courbures dans différentes directions possibles, des formes à hélice similaires à celles des bateaux, des formes à hélices opposées, des formes à hélices similaires à celles des turbines, des formes à herse, des formes similaires à celles des lames standards des bineuses rotatives, des fraises rotatives ou des machines pour l'agriculture et le jardinage en général.
